(19) Europäisches Patentamt / European Patent Office / Office européen des brevets

(11) **EP 3 202 747 B1**

(12) **EUROPEAN PATENT SPECIFICATION**

(45) Date of publication and mention
of the grant of the patent:
**23.12.2020 Bulletin 2020/52**

(21) Application number: **15863565.6**

(22) Date of filing: **04.11.2015**

(51) Int Cl.:
*C04B 35/468* (2006.01)     *H01C 7/02* (2006.01)

(86) International application number:
**PCT/JP2015/081042**

(87) International publication number:
**WO 2016/084562 (02.06.2016 Gazette 2016/22)**

(54) **BARIUM TITANATE SEMICONDUCTOR CERAMIC, BARIUM TITANATE SEMICONDUCTOR CERAMIC COMPOSITION, AND PTC THERMISTOR FOR TEMPERATURE DETECTION**

BARIUMTITANATHALBLEITERKERAMIK, BARIUMTITANATHALBLEITERKERAMIKZUSAMMENSETZUNG UND PTC-THERMISTOR ZUR TEMPERATURDETEKTION

CÉRAMIQUE SEMI-CONDUCTRICE DE TITANATE DE BARYUM, COMPOSITION CÉRAMIQUE SEMI-CONDUCTRICE DE TITANATE DE BARYUM ET THERMISTANCE PTC POUR DÉTECTION DE TEMPÉRATURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.11.2014 JP 2014239174**

(43) Date of publication of application:
**09.08.2017 Bulletin 2017/32**

(73) Proprietor: **Murata Manufacturing Co., Ltd.**
**Nagaokakyo-shi, Kyoto 617-8555 (JP)**

(72) Inventors:
• **ABE, Naoaki**
  **Nagaokakyo-shi**
  **Kyoto 617-8555 (JP)**

• **MATSUNAGA, Tatsuya**
  **Nagaokakyo-shi**
  **Kyoto 617-8555 (JP)**

(74) Representative: **Stöckeler, Ferdinand et al**
**Schoppe, Zimmermann, Stöckeler**
**Zinkler, Schenk & Partner mbB**
**Patentanwälte**
**Radlkoferstrasse 2**
**81373 München (DE)**

(56) References cited:
**EP-A1- 0 415 428          EP-A1- 2 774 904**
**WO-A1-2013/065441    JP-A- H0 388 770**
**JP-A- H02 289 426       JP-A- H03 215 353**
**JP-A- S57 157 502        JP-A- 2000 095 562**

EP 3 202 747 B1

**Description**

TECHNICAL FIELD

The present invention relates to a barium titanate semiconductor ceramic, a barium titanate semiconductor ceramic composition, and a positive temperature coefficient thermistor for temperature detection. More particularly, the present invention relates to a positive temperature coefficient thermistor for temperature detection, which has a low room-temperature resistance, a low detection temperature, and a high degree of detection accuracy, and a barium titanate semiconductor ceramic and a barium titanate semiconductor ceramic composition which are suitable for preparing such a positive temperature coefficient thermistor for temperature detection.

BACKGROUND ART

In electronic devices such as laptop personal computers and tablet terminals, positive temperature coefficient thermistors (PTC thermistors) are used as temperature detection elements that detect abnormal internal heat generation and the like.

The positive temperature coefficient thermistors have substantially constant resistance values from room temperature (for example, 25°C) to the Curie points, and undergo rapid increases in resistance value at temperatures in excess of the Curie points. Positive temperature coefficient thermistors for temperature detection apply the foregoing property to temperature detection.

The positive temperature coefficient thermistors for temperature detection are required to have characteristics such as a low room-temperature resistance, a low detection temperature, and a high degree of detection accuracy.

The reason why the room-temperature resistance is required to be low is that when the room-temperature resistance is low, multiple positive temperature coefficient thermistors can be used in such a way that abnormal heat generation is monitored at multiple points together with the thermistors connected in series. It is to be noted that $\rho_{25}$ that is a resistivity at 25°C is typically used as an index of the room-temperature resistance.

In addition, the reason why the detection temperature is required to be low is that when the detection temperature is low, even slight abnormal heat generation can be detected. Alternatively, the reason is that it becomes possible to arrange, in electronic devices, positive temperature coefficient thermistors for temperature detection at distances from electronic components monitored for abnormal heat generation, and in this case, the degree of freedom is improved for layout design.

Furthermore, the market environment has been found to be also changed as follows. First, for mobile terminals, with the accelerated spread of non-contact power feeding methods in mobile terminals, there is a possibility that in the presence of metallic foreign substances between charging racks and the mobile terminals in power feeding, the metallic foreign substances will generate heat abnormally, thereby resulting in ignition and smoke. Therefore, there has been a need for overheat detection in temperature ranges closer to room temperature. In addition, heat generation of housings has been increased due to the increase in performance of mobile terminals, and there has been a need for overheat detection on the lower temperature side in order to prevent users from suffering from low temperature burns. Also for these reasons, the detection temperatures of positive temperature coefficient thermistors for temperature detection have been required to be lowered.

In addition, the reason why the degree of detection accuracy is required to be high is that there is a need to prevent malfunction.

A method of lowering the Curie point by adjusting the composition of raw materials, and a method of increasing the slope of resistance-temperature characteristics (increasing $\alpha$) are known as methods for lowering the detection temperatures (the method of increasing the slope of resistance-temperature characteristics also produces the effect of increasing the degree of detection accuracy at the same time, because of a significant increase in resistivity with a slight increase in temperature).

For example, to common barium titanate semiconductor ceramics, a rare-earth element and Mn are often added respectively as a donor (semiconducting agent) and an acceptor (characteristic improving agent for increasing the slope of resistance-temperature characteristics). Further, to such barium titanate semiconductor ceramics, a method of lowering the Curie temperature by partially substituting the composition with Sr or the like, or a method of further causing an increase in $\alpha$ by increasing the additive amount of Mn is applied in order to lower the detection temperatures.

However, the methods both contribute to lowering the detection temperatures, but adversely increase the room-temperature resistances ($\rho_{25}$). Therefore, it is difficult to achieve a balance between lowering the detection temperature and keeping the room-temperature resistance low.

Under the circumstances, Patent Document 1 (WO 2013/065441 A1) discloses a barium titanate semiconductor ceramic adapted to address the achievement of a balance between lowering the detection temperature and keeping the room-temperature resistance low.

The barium titanate semiconductor ceramic disclosed in Patent Document 1 contains a perovskite-type compound containing Ba, Ti, Sr, and Ca; Mn; and a semiconducting agent, and when the total content of Ba, Sr, Ca, and the semiconducting agent in parts by mol is regarded as 100, the Sr content a in parts by mol and the Ca content b in parts by mol are adapted to be:

12.5 ≤ b ≤ 17.5 in the case of 20.0 ≤ a ≤ 22.5; or
12.5 ≤ b ≤ 15.0 in the case of 22.5 ≤ a ≤ 25.0, and when the total content of Ti and Mn in parts by mol is regarded as 100, the Mn content c in parts by mol is adapted to be:

$$0.030 \leq b \leq 0.045.$$

The barium titanate semiconductor ceramic in Patent Document 1 causes, with the addition of Ca in a relatively large amount thereto, substitution of Ca atoms that are originally substituted for sites where Ba atoms are present, also for sites where Ti atoms are present, thereby producing an acceptor effect from the valence balance, for inducing increased α. The positive temperature coefficient thermistor using the barium titanate semiconductor ceramic in Patent Document 1 is supposed to have a low room-temperature resistance, and have resistance-temperature characteristics capable of being used as for overheat detection, thereby allowing overheat detection around room temperature.

PRIOR ART DOCUMENT

PATENT DOCUMENT

Patent Document 1: WO 2013/065441 A1

SUMMARY OF THE INVENTION

Problem to be solved by the invention

However, in recent years, positive temperature coefficient thermistors for temperature detection have been required to have detection temperatures further lowered. More specifically, as described above, with the accelerated spread of non-contact power feeding methods in mobile terminals, there is a possibility that in the presence of metallic foreign substances between charging racks and the mobile terminals in power feeding, the metallic foreign substances will generate heat abnormally, thereby resulting in ignition and smoke. Therefore, there has been a need for overheat detection in temperature ranges closer to room temperature. In addition, heat generation of housings has been increased due to the increase in performance of mobile terminals, and there has been a need for overheat detection on the lower temperature side in order to prevent users from suffering from low temperature burns.

With the technique disclosed in Patent Document 1, methods for further lowering the detection temperatures have been examined, but the addition of Ca causes the room-temperature resistances to be increased, as with the addition of Mn. Accordingly, simply further increasing the additive amount of Ca according to the technique disclosed in Patent Document 1 in return causes the room-temperature resistances to be increased, thereby failing to achieve a balance between lowering the detection temperature and keeping the room-temperature resistance low. Means for solving the problem

The present invention has been achieved in order to solve the problems mentioned above. As a means therefor, a barium titanate semiconductor ceramic according to the present invention has a detection temperature lowered with α increased by substitution of a larger amount of Ca than the barium titanate semiconductor ceramic disclosed in Patent Document 1, and at the same time, keeps a low room-temperature resistance with the optimized amount of the other composition (Sr, Mn).

More specifically, in the barium titanate semiconductor ceramic according to the present invention, the Ca content, Sr content, and Mn content are adapted to fall within certain ranges with respect to the Ti content, thereby achieving a balance between further lowering the detection temperature and keeping the room-temperature resistance low.

Specifically, a barium titanate semiconductor ceramic as defined in claim 1 contains, as its main constituent, a perovskite-type compound containing Ba, Ca, Sr, and Ti, and further contains R (R represents at least one selected from Y, La, Ce, Pr, Nd, Sm, Eu, Gd, Tb, Dy, Ho, Er, Tm, Yb, and Lu), Mn, and Si, and when the barium titanate semiconductor ceramic is dissolved, the Ca content x in parts by mol, the Sr content y in parts by mol, and the Mn content z in parts by mol in a case of Ti regarded as 100 parts by mol respectively meet 20 ≤ x ≤ 25, 19 ≤ y ≤ 25, and 0.01 ≤ z

$\leq 0.03$, and meet $y \geq -0.8x + 37$ in the case of $0.01 \leq z < 0.019$, and $y \leq -x + 48$ in the case of $0.021 < z \leq 0.03$.

According to the present invention, the ceramic contains no Pb, except in the case of containing Pb as an impurity. In this case, the invention is adapted to lead-free electronic components required from the perspective of reducing environmental loads in recent years.

In addition, the present invention is directed to a barium titanate semiconductor ceramic composition which is subjected to firing, thereby serving as the barium titanate semiconductor ceramic mentioned above.

In addition, the present invention is directed to a positive temperature coefficient thermistor for temperature detection, including: a ceramic body including the barium titanate semiconductor ceramic mentioned above; and an external electrode formed on an outer surface of the ceramic body.

Advantageous effect of the invention

The barium titanate semiconductor ceramic according to the present invention is low in room-temperature resistance. Specifically, $\rho_{25}$ (resistivity at 25°C) meets $\rho_{25} \leq 70 \ \Omega \cdot cm$.

In addition, the barium titanate semiconductor ceramic according to the present invention has a low 100-times point (TR100) that is a temperature in the case of growing to 100 times the resistivity $\rho_{25}$, and meets $TR100 \leq 75°C$.

In addition, the barium titanate semiconductor ceramic according to the present invention has a large slope of resistance-temperature characteristics. Specifically, the slope $\alpha_{10-100}$ of resistivity with respect to temperature in the case of growing from 10 times to 100 times the resistivity $\rho_{25}$ meets $\{ (\alpha_{10-100}) / \log (\rho_{25}) \} \geq 10$.

The positive temperature coefficient thermistor for temperature detection according to the present invention, using the barium titanate semiconductor ceramic according to the present invention, which has the foregoing characteristics, has a low room-temperature resistance, a low detection temperature, and a high degree of detection accuracy.

BRIEF EXPLANATION OF DRAWINGS

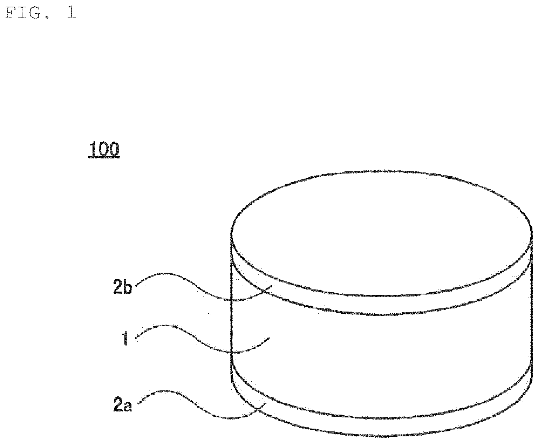

FIG. 1 is a perspective view illustrating a positive temperature coefficient thermistor 100 according to an embodiment.

MODE FOR CARRYING OUT THE INVENTION

A mode for carrying out the invention will be described below.

A barium titanate semiconductor ceramic according to the present embodiment contains, as its main constituent, a perovskite-type compound containing Ba, Ca, Sr, and Ti, and further contains R (R represents at least one selected from Y, La, Ce, Pr, Nd, Sm, Eu, Gd, Tb, Dy, Ho, Er, Tm, Yb, and Lu), Mn, and Si.

It can be confirmed, for example, by a method such as XRD, that the barium titanate semiconductor ceramic according to the present embodiment contains a perovskite-type compound containing Ba, Ca, Sr, and Ti.

Sr is added mainly for shifting the Curie point of the semiconductor ceramic to the low temperature side.

Ca is added mainly for controlling the grain size of the semiconductor ceramic, and inducing increased $\alpha$, thereby increasing the slope of resistance-temperature characteristics.

R (R represents at least one selected from Y, La, Ce, Pr, Nd, Sm, Eu, Gd, Tb, Dy, Ho, Er, Tm, Yb, and Lu) is added mainly for turning a dielectric (insulator) ceramic into a semiconductor.

Mn is added mainly for inducing increased $\alpha$ for the semiconductor ceramic, thereby increasing the slope of resistance-temperature characteristics.

Si is added mainly as a sintering aid for the semiconductor ceramic.

When the barium titanate semiconductor ceramic according to the present embodiment is dissolved, and subjected to a quantitative analysis, for example, by ICP-AES (Inductively Coupled Plasma-Atomic Emission Spectrometry), as for the content ratios of the respective elements, the Ca content x in parts by mol, the Sr content y in parts by mol, and the Mn content z in parts by mol in the case of Ti regarded as 100 parts by mol respectively meet:

$20 \leq x \leq 25$;
$19 \leq y \leq 25$; and
$0.01 \leq z \leq 0.03$, and
meet: $y \geq -0.8x + 37$ in the case of $0.01 \leq z < 0.019$; and
$y \leq -x + 48$ in the case of $0.021 < z \leq 0.03$.

The barium titanate semiconductor ceramic according to the present embodiment contains no Pb, except in the case of containing Pb as an impurity.

It is to be noted that as for the respective elements mentioned above, Sr, Ca, and R are considered mainly as substitutions for sites where Ba atoms are present, whereas Mn is considered mainly as substitutions for sites where Ti atoms are present. However, Ca is also considered as substitutions for sites Ti atoms are present. In the case of the dissolved barium titanate semiconductor ceramic according to the present embodiment, the total content w of Ba, Sr, Ca, and R in parts by mol preferably falls within the range of approximately $90 \leq w \leq 101$ when the total content of Ti and Mn in parts by mol is regarded as 100. It is to be noted that the sites where Ba atoms are present and the sites where Ti toms are present may each contain other elements.

FIG. 1 shows a positive temperature coefficient thermistor 100 according to the present embodiment. In this regard, FIG. 1 is a perspective view illustrating the positive temperature coefficient thermistor 100.

The positive temperature coefficient thermistor 100 is a so-called bulk-type positive temperature coefficient thermistor.

The positive temperature coefficient thermistor 100 includes a ceramic body 1. The ceramic body 1 is composed of the above-described barium titanate semiconductor ceramic according to the present embodiment. According to the present embodiment, the ceramic body 1 has a disc-like shape of 2 mm in thickness and 7.8 mm in diameter. However, the shape of the ceramic body 1 is not limited thereto, but may be, for example, a rectangular plate-like shape.

On outer surfaces of the semiconductor ceramic 1, a pair of external electrodes 2a, 2b is formed. The external electrodes 2a, 2b are formed to have a single-layer structure or a multilayer structure including a conductive material such as Cu, Ni, Al, Cr, Ag, a Ni-Cr alloy, and Ni-Cu. According to the present embodiment, the electrodes have a three-layer structure of: a first layer of a Cr layer; a second layer of a NiCr layer; and a third layer of an Ag layer. The Cr layer serves as an ohmic electrode. According to the present embodiment, the Cr layer is 0.3 $\mu$m in thickness, the NiCr layer is 1.0 $\mu$m in thickness, and the Ag layer is 1.0 $\mu$m in thickness.

Next, an example of a method for manufacturing the barium titanate semiconductor ceramic according to the present embodiment, and an example of a method for manufacturing the positive temperature coefficient thermistor 100 according to the present embodiment will be described.

First, for example, $BaCO_3$, $TiO_2$, $SrCO_3$, and $CaCO_3$ were prepared as main constituents. However, the material forms of the respective elements are not limited thereto.

In addition, for example, $Er_2O_3$ was prepared as a donor (semiconducting agent). However, the material form is not limited thereto. In addition, it is also possible to use, as the semiconducting agent, at least one selected from Y, La, Ce, Pr, Nd, Sm, Eu, Gd, Tb, Dy, Ho, Tm, Yb, and Lu in place of Er ($Er_2O_3$).

In addition, for example, $MnCO_3$ (resistance-temperature characteristic improving agent) and $SiO_2$ (sintering aid) were prepared as other additives. However, the material forms of the respective elements are not limited thereto.

Next, the respective raw materials mentioned above were combined in desired proportions, and subjected to wet grinding and mixing along with pure water and grinding balls in a pot, thereby providing mixture slurry. According to the present embodiment, a polyethylene pot was used for the pot, and zirconia balls were used for the grinding balls.

It is to be noted that the desired combination proportions of the respective raw materials refer to desired combination proportions such that when a semiconductor ceramic prepared is dissolved, the Ca content x in parts by mol, the Sr content y in parts by mol, and the Mn content z in parts by mol in the case of Ti regarded as 100 parts by mol consequently meet the relationships mentioned above.

Next, the mixture slurry obtained was dehydrated and dried, and then subjected to calcination to obtain a calcined powder. According to the present embodiment, the calcination temperature was adjusted to 1200°C.

Next, the calcined powder obtained and the binder were mixed, and subjected to granulation, thereby providing granulated particles.

Next, the granulated particles obtained were subjected to shape forming by uniaxial pressing, thereby providing a compact.

Next, the obtained compact was placed in a sagger, and subjected to firing in the atmosphere, thereby completing the barium titanate semiconductor ceramic according to the present embodiment. According to the present embodiment, a sagger containing a main constituent composed of $Al_2O_3$, $SiO_2$, and ZrO was used. In addition, the firing temperature was adjusted to 1380°C, and the firing time was adjusted to 2 hours.

When the obtained barium titanate semiconductor ceramic is dissolved and subjected to a quantitative analysis, the Ca content x in parts by mol, the Sr content y in parts by mol, and the Mn content z in parts by mol in the case of Ti regarded as 100 parts by mol meet the relationships mentioned above.

Next, as shown in FIG. 1, on outer surfaces of the obtained barium titanate semiconductor ceramic 1, the pair of external electrodes 2a, 2b was formed by a plating method, a sputtering method, a coating-baking method, or the like, thereby completing the positive temperature coefficient thermistor 100 according to the present embodiment. Specifically, on the outer surfaces (both front and back principal surfaces) of the semiconductor ceramic 1, first layers of Cr layers, second layers of NiCr layers, and third layers of Ag layers for the external electrodes 2a, 2b were formed by a sputtering method.

[Experimental Example]

In order to confirm the effectiveness of the present invention, the following experiments were carried out.

(Experiment 1)

Barium titanate semiconductor ceramics of 102 different compositions were prepared by the method according to embodiment described above. Then, the semiconductor ceramics were used to prepare, as samples for the present experiment, so-called bulk-type positive temperature coefficient thermistors as shown in FIG. 1.

Specifically, the 102 different semiconductor ceramics listed in Tables 1 to 5 were used to prepare positive temperature coefficient thermistors for samples.

[Table 1]

Table 1

| In the case of containing 0.005 parts by mol of Mn | | | | | | | | |
|---|---|---|---|---|---|---|---|---|
| Sample Number | Ca (part by mol) | Sr (part by mol) | Mn (part by mol) | Er_ρ min (part by mol) | $\rho_{25}$ ($\Omega \cdot$cm) | TR100 (°C) | $\alpha_{10\text{-}100}$ (%/°C) | $(\alpha_{10\text{-}100})$ /log $(\rho_{25})$ |
| *1 | 20 | 19 | 0.005 | 0.1 | 7.7 | 87.3 | 8.5 | 9.6 |
| *2 | 20 | 21 | 0.005 | 0.1 | 8.6 | 82.4 | 9.1 | 9.7 |
| *3 | 20 | 23 | 0.005 | 0.1 | 10.3 | 76.3 | 10.4 | 10.3 |
| *4 | 20 | 25 | 0.005 | 0.1 | 16.4 | 70.2 | 11.4 | 9.4 |
| *5 | 22.5 | 19 | 0.005 | 0.1 | 11.3 | 82.4 | 10.3 | 9.8 |
| *6 | 22.5 | 21 | 0.005 | 0.1 | 12.5 | 76.9 | 10.9 | 9.9 |
| *7 | 22.5 | 23 | 0.005 | 0.1 | 17.2 | 70.1 | 11.8 | 9.6 |
| *8 | 22.5 | 25 | 0.005 | 0.1 | 24.1 | 62.3 | 13.7 | 9.9 |
| *9 | 25 | 19 | 0.005 | 0.1 | 14.9 | 76.2 | 11.2 | 9.5 |
| *10 | 25 | 21 | 0.005 | 0.1 | 16.6 | 70.9 | 11.9 | 9.8 |
| *11 | 25 | 23 | 0.005 | 0.1 | 23.4 | 62.7 | 13.5 | 9.9 |
| *12 | 25 | 25 | 0.005 | 0.1 | 43.1 | 57.3 | 15.7 | 9.6 |
| (sample numbers with * fall outside the scope of the present invention) | | | | | | | | |

[Table 2]

Table 2

| In the case of containing 0.01 parts by mol of Mn | | | | | | | | |
|---|---|---|---|---|---|---|---|---|
| Sample Number | Ca (part by mol) | Sr (part by mol) | Mn (part by mol) | Er_ρ min (part by mol) | P25 ($\Omega \cdot$cm) | TR100 (°C) | $\alpha_{10\text{-}100}$ (%/°C) | $(\alpha_{10\text{-}100})$ /log $(\rho_{25})$ |
| *101 | 18 | 19 | 0.01 | 0.15 | 6.8 | 90.9 | 8.8 | 10.6 |
| *102 | 18 | 21 | 0.01 | 0.15 | 8.3 | 85.3 | 10.1 | 11.0 |
| *103 | 18 | 23 | 0.01 | 0.15 | 10.9 | 78.3 | 10.7 | 10.3 |
| *104 | 18 | 25 | 0.01 | 0.15 | 16. 9 | 72.6 | 12.2 | 9.9 |

(continued)

| In the case of containing 0.01 parts by mol of Mn | | | | | | | |
|---|---|---|---|---|---|---|---|
| Sample Number | Ca (part by mol) | Sr (part by mol) | Mn (part by mol) | Er_ρ min (part by mol) | P25 ($\Omega \cdot cm$) | TR100 (°C) | $\alpha_{10-100}$ (%/°C) | $(\alpha_{10-100})$ /log $(\rho_{25})$ |
| *105 | 20 | 17 | 0.01 | 0.15 | 8.0 | 93.7 | 9.6 | 10.6 |
| *106 | 20 | 19 | 0.01 | 0.15 | 8.9 | 82.1 | 11.3 | 11.9 |
| 107 | 20 | 21 | 0.01 | 0.15 | 9.8 | 74.1 | 12.3 | 12.4 |
| 108 | 20 | 23 | 0.01 | 0.15 | 12.4 | 69.1 | 13.2 | 12.1 |
| 109 | 20 | 25 | 0.01 | 0.15 | 20.9 | 63.8 | 14.4 | 10.9 |
| *110 | 20 | 27 | 0.01 | 0.15 | 71.5 | 59.3 | 16.4 | 8.8 |
| *111 | 22.5 | 17 | 0.01 | 0.15 | 11.0 | 87.3 | 12.3 | 11.8 |
| 112 | 22.5 | 19 | 0.01 | 0.15 | 14.1 | 74.7 | 13.2 | 11.5 |
| 113 | 22.5 | 21 | 0.01 | 0.15 | 15.8 | 67.9 | 14.1 | 11.8 |
| 114 | 22.5 | 23 | 0.01 | 0.15 | 21.1 | 62.8 | 14.9 | 11.3 |
| 115 | 22.5 | 25 | 0.01 | 0.15 | 32.4 | 55.8 | 16.7 | 11.1 |
| *116 | 22.5 | 27 | 0.01 | 0.15 | 121.0 | 51.7 | 18.9 | 9.1 |
| *117 | 25 | 17 | 0.01 | 0.15 | 18.0 | 80.3 | 14.9 | 11.9 |
| 118 | 25 | 19 | 0.01 | 0.15 | 20.7 | 68.4 | 16.3 | 12.4 |
| 119 | 25 | 21 | 0.01 | 0.15 | 23.5 | 62.3 | 16.8 | 12.3 |
| 120 | 25 | 23 | 0.01 | 0.15 | 32.4 | 56.6 | 19.3 | 12.8 |
| 121 | 25 | 25 | 0.01 | 0.15 | 55.1 | 48.4 | 21.3 | 12.2 |
| *122 | 25 | 27 | 0.01 | 0.15 | 217.6 | 43.0 | 22.5 | 9.6 |
| *123 | 27 | 19 | 0.01 | 0.15 | 72.4 | 62.1 | 17.8 | 9.6 |
| *124 | 27 | 21 | 0.01 | 0.15 | 91.3 | 55.3 | 18.4 | 9.4 |
| *125 | 27 | 23 | 0.01 | 0.15 | 127.4 | 51.2 | 21.4 | 10.2 |
| *126 | 27 | 25 | 0.01 | 0.15 | 246.9 | 44.3 | 24.8 | 10.4 |
| (sample numbers with * fall outside the scope of the present invention) | | | | | | | |

[Table 3]

Table 3

| In the case of containing 0.02 parts by mol of Mn | | | | | | | |
|---|---|---|---|---|---|---|---|
| Sample Number | Ca (part by mol) | Sr (part by mol) | Mn (part by mol) | Er_ρ min (part by mol) | $\rho 25$ ($\Omega \cdot cm$) | TR100 (°C) | $\alpha_{10-100}$ (%/0°C) | $(\alpha_{10-10})$ /log $(\rho_{25})$ |
| *201 | 18 | 19 | 0.02 | 0.18 | 8.8 | 86.3 | 10.1 | 10.7 |
| *202 | 18 | 21 | 0.02 | 0.18 | 9.8 | 78.8 | 10.5 | 10.6 |
| *203 | 18 | 23 | 0.02 | 0.18 | 14.6 | 70.8 | 11.4 | 9.8 |
| *204 | 18 | 25 | 0.02 | 0.18 | 24.6 | 60.3 | 13.4 | 9.6 |
| *205 | 20 | 17 | 0.02 | 0.18 | 9.4 | 91.0 | 12.7 | 13.0 |

(continued)

| In the case of containing 0.02 parts by mol of Mn | | | | | | | |
|---|---|---|---|---|---|---|---|
| Sample Number | Ca (part by mol) | Sr (part by mol) | Mn (part by mol) | Er_$\rho$ min (part by mol) | $\rho25$ ($\Omega \cdot cm$) | TR100 (°C) | $\alpha_{10-100}$ (%/0°C) | ($\alpha_{10-10}$) /log ($\rho_{25}$) |
| 206 | 20 | 19 | 0.02 | 0.18 | 10. 9 | 74.7 | 13.3 | 12.8 |
| 207 | 20 | 21 | 0.02 | 0.18 | 12.2 | 70.3 | 13.9 | 12.8 |
| 208 | 20 | 23 | 0.02 | 0.18 | 19.9 | 63.4 | 15.5 | 12.0 ' |
| 209 | 20 | 25 | 0.02 | 0.18 | 32.4 | 54.9 | 17.0 | 11.3 |
| *210 | 20 | 27 | 0.02 | 0.18 | 94.7 | 49.3 | 19.3 | 9.8 |
| *211 | 22.5 | 17 | 0.02 | 0.18 | 14.7 | 85.0 | 15.8 | 13.5 |
| 212 | 22.5 | 19 | 0.02 | 0.18 | 17.6 | 69.9 | 17.2 | 13.8 |
| 213 | 22.5 | 21 | 0.02 | 0.18 | 19.3 | 63.8 | 17.8 | 13.8 |
| 214 | 22.5 | 23 | 0.02 | 0.18 | 28.7 | 56.8 | 19.0 | 13.0 |
| 215 | 22.5 | 25 | 0.02 | 0.18 | 45.6 | 49.0 | 21.4 | 12.9 |
| *216 | 22.5 | 27 | 0.02 | 0.18 | 156.4 | 44.6 | 23.6 | 10.8 |
| *217 | 25 | 17 | 0.02 | 0.18 | 23.4 | 78.4 | 18.6 | 13.6 |
| 218 | 25 | 19 | 0.02 | 0.18 | 26.9 | 65.0 | 20.5 | 14.3 |
| 219 | 25 | 21 | 0.02 | 0.18 | 31.1 | 57.2 | 21.7 | 14.5 |
| 220 | 25 | 23 | 0.02 | 0.18 | 43.4 | 50.3 | 24.1 | 14.7 |
| 221 | 25 | 25 | 0.02 | 0.18 | 68.5 | 43.6 | 25.5 | 13.9 |
| *222 | 25 | 27 | 0.02 | 0.18 | 421.3 | 38.9 | 27.7 | 10.6 |
| *223 | 27 | 19 | 0.02 | 0.18 | 99.3 | 58.4 | 23.7 | 11.9 |
| *224 | 27 | 21 | 0.02 | 0.18 | 133.8 | 47.8 | 25.8 | 12.1 |
| *225 | 27 | 23 | 0.02 | 0.18 | 213.2 | 42.0 | 27.6 | 11.9 |
| *226 | 27 | 25 | 0.02 | 0.18 | 513 9 | 36.7 | 28.3 | 10.4 |
| (sample numbers with * fall outside the scope of the present invention) | | | | | | | |

[Table 4]

Table 4

| In the case of containing 0.03 parts by mol of Mn | | | | | | | |
|---|---|---|---|---|---|---|---|
| Sample Number | Ca (part by mol) | Sr (part by mol) | Mn (part by mol) | Er_$\rho$ min (part by mol) | $\rho_{25}$ ($\Omega \cdot cm$) | TR100 (°C) | $\alpha_{10-100}$ (%/°C) | ($\alpha_{10-100}$)/log ($\rho_{25}$) |
| *301 | 18 | 19 | 0.03 | 0.2 | 14.2 | 83.5 | 11.7 | 10.2 |
| *302 | 18 | 21 | 0.03 | 0.2 | 15.9 | 76.9 | 12.5 | 10.4 |
| *303 | 18 | 23 | 0.03 | 0.2 | 23.4 | 66.7 | 13.5 | 9.9 |
| *304 | 18 | 25 | 0.03 | 0.2 | 33.6 | 55.1 | 14.6 | 9.6 |
| *305 | 20 | 17 | 0.03 | 0.2 | 16.3 | 89.0 | 15.1 | 12.4 |
| 306 | 20 | 19 | 0.03 | 0.2 | 19.0 | 73.5 | 15.5 | 12.1 |

(continued)

| In the case of containing 0.03 parts by mol of Mn | | | | | | | |
|---|---|---|---|---|---|---|---|
| Sample Number | Ca (part by mol) | Sr (part by mol) | Mn (part by mol) | Er_$\rho$ min (part by mol) | $\rho_{25}$ ($\Omega \cdot cm$) | TR100 (°C) | $\alpha_{10\text{-}100}$ (%/°C) | $(\alpha_{10\text{-}100})/\log(\rho_{25})$ |
| 307 | 20 | 21 | 0.03 | 0.2 | 21.0 | 68.9 | 16.3 | 12.3 |
| 308 | 20 | 23 | 0.03 | 0.2 | 26.3 | 60.4 | 17.3 | 12.2 |
| 309 | 20 | 25 | 0.03 | 0.2 | 45.1 | 50.3 | 19.5 | 11.8 |
| *310 | 20 | 27 | 0.03 | 0.2 | 127.9 | 44.3 | 22.7 | 10.8 |
| *311 | 22.5 | 17 | 0.03 | 0.2 | 23.4 | 83.0 | 17.2 | 12.6 |
| 312 | 22.5 | 19 | 0.03 | 0.2 | 28.4 | 67.4 | 18.9 | 13.0 |
| 313 | 22.5 | 21 | 0.03 | 0.2 | 32.3 | 62.4 | 19.5 | 12.9 |
| 314 | 22.5 | 23 | 0.03 | 0.2 | 42.4 | 53.6 | 20.7 | 12.7 |
| 315 | 22.5 | 25 | 0.03 | 0.2 | 68.7 | 45.0 | 23.4 | 12.7 |
| *316 | 22.5 | 27 | 0.03 | 0.2 | 249.8 | 40.9 | 25.2 | 10.5 |
| *317 | 25 | 17 | 0.03 | 0.2 | 41.9 | 75.9 | 22.0 | 13.6 |
| 318 | 25 | 19 | 0.03 | 0.2 | 52.2 | 61.3 | 22.9 | 13.3 |
| 319 | 25 | 21 | 0.03 | 0.2 | 60.9 | 54.3 | 24.1 | 13.5 |
| 320 | 25 | 23 | 0.03 | 0.2 | 68.9 | 46.7 | 25.6 | 13.9 |
| *321 | 25 | 25 | 0.03 | 0.2 | 224.9 | 39.7 | 26.5 | 11.3 |
| *322 | 25 | 27 | 0.03 | 0.2 | 1003.0 | - | - | - |
| *323 | 27 | 19 | 0.03 | 0.2 | 137.9 | 54.9 | 25.6 | 12.0 |
| *324 | 27 | 21 | 0.03 | 0.2 | 199 4 | 44.5 | 27.6 | 12.0 |
| *325 | 27 | 23 | 0.03 | 0.2 | 547.7 | 39.4 | 28.6 | 10.4 |
| *326 | 27 | 25 | 0.03 | 0.2 | 2463.0 | - | - | - |
| (sample numbers with * fall outside the scope of the present invention) | | | | | | | |

[Table 5]

Table 5

| In the case of containing 0.04 parts by mol of Mn | | | | | | | |
|---|---|---|---|---|---|---|---|
| Sample Number | Ca (part by mol) | Sr (part by mol) | Mn (part by mol) | Er_$\rho$ min (part by mol) | P25 ($\Omega \cdot cm$) | TR100 (°C) | $\alpha_{10\text{-}100}$ (%/°C) | $(\alpha_{10\text{-}100})/\log(\rho_{25})$ |
| *401 | 20 | 19 | 0.04 | 0.25 | 77.1 | 70.3 | 19.8 | 10.5 |
| *402 | 20 | 21 | 0.04 | 0.25 | 96.6 | 65.7 | 21.1 | 10.6 |
| *403 | 20 | 23 | 0.04 | 0.25 | 145.0 | 58.7 | 22.3 | 10.3 |
| *404 | 20 | 25 | 0.04 | 0.25 | 289.1 | 46.7 | 24.3 | 9.9 |
| *405 | 22.5 | 19 | 0.04 | 0.25 | 143.6 | 65.3 | 22.6 | 10.5 |
| *406 | 22.5 | 21 | 0.04 | 0.25 | 179.0 | 59.7 | 24.3 | 10.8 |
| *407 | 22.5 | 23 | 0.04 | 0.25 | 289.1 | 51.4 | 25.4 | 10.3 |

(continued)

| In the case of containing 0.04 parts by mol of Mn | | | | | | | |
|---|---|---|---|---|---|---|---|
| Sample Number | Ca (part by mol) | Sr (part by mol) | Mn (part by mol) | Er_$\rho$ min (part by mol) | P25 ($\Omega \cdot$cm) | TR100 (°C) | $\alpha_{10-100}$ (%/°C) | ($\alpha_{10-100}$)/ log ($\rho_{25}$) |
| *408 | 22.5 | 25 | 0.04 | 0.25 | 896.3 | 42.1 | 26.1 | 8.8 |
| *409 | 25 | 19 | 0.04 | 0.25 | 349.9 | 57.8 | 25.3 | 9.9 |
| *410 | 25 | 21 | 0.04 | 0.25 | 579.4 | 50.7 | 27.4 | 9.9 |
| *411 | 25 | 23 | 0.04 | 0.25 | 1023.1 | - | - | - |
| *412 | 25 | 25 | 0.04 | 0.25 | 4932.0 | - | - | - |
| (sample numbers with * fall outside the scope of the present invention) | | | | | | | | |

For example, the positive temperature coefficient thermistor of the sample 1 is prepared with the use of the semiconductor ceramic containing 2.0 parts by mol of Ca, 19 parts by mol of Sr, 0.005 parts by mol of Mn, and 0.1 parts by mol of Er each with respect to 100 parts by mol of Ti when the ceramic is dissolved.

More specifically, the semiconductor ceramic for the sample 1 is prepared by combining raw materials such as $BaCO_2$, $TiO_2$, $SrCO_3$, $CaCO_3$, $Er_2O_5$, and $MnCO_3$ so as to achieve the element content ratios mentioned above when the ceramic is dissolved.

It is to be noted that because the resistivity value of the semiconductor ceramic varies significantly with changes in the additive amount of Er as a donor (semiconducting agent), various samples with varying donor amounts were evaluated, and the sample with the Er content (Er-$\rho_{min}$), which exhibited the minimum resistivity, was adopted as the foregoing sample, in order to allows comparisons on the same basis.

For the foregoing sample (positive temperature coefficient thermistor), the current value obtained when a voltage was applied at room temperature (25°C) was measured to figure out the room-temperature resistance ($\rho_{25}$).

In addition, with each sample put in a thermostatic bath, the resistivity was measured at temperatures every 10°C from 20°C to 250 degrees, thereby figuring out resistance-temperature characteristics.

The resistance was measured as described above with use of a four-terminal method, and the average value was calculated with the number of samples n = 5. A multimeter (334401A from Agilent) was used for a measurement instrument.

From the foregoing measurement data, a 10-times point (TRIO) and a 100-times point (TR100) were figured out for each sample. The 10-times point (TRIO) is a temperature in the case of growing to 10 times the resistivity ρ25. The 100-times point (TR100) is a temperature in the case of growing to 100 times the resistivity $\rho_{25}$.

Furthermore, an index of the resistance-temperature characteristics and a resistance-temperature coefficient $\alpha_{10-100}$ was defined. The resistance-temperature coefficient $\alpha_{10-100}$ was calculated from the following (Equation 1).

[Mathematical Formula 1]

Mathematical Formula 1

$$\alpha_{10-100} = 230 \times [\log(\rho_{25} \times 100) - \log(\rho_{25} \times 10)] / (TR100 - TR10) \quad \cdots \quad (Equation\ 1)$$

The $\alpha_{10-100}$ represents the slope of resistivity with respect to temperature in the case of growing from 10 times to 100 times the resistivity $\rho_{25}$. Larger $\alpha_{10-100}$ indicates increased jump characteristics, which means the increased ratio of the resistance in operation to the room-temperature resistance, and thus indicates that the positive temperature coefficient thermistor for temperature detection has a higher degree of accuracy.

However, in general, a semiconductor ceramic that is higher in resistivity is also larger in $\alpha_{10-100}$, and thus, as it is, it is difficult to evaluate the advantageous effect of the present invention accurately.

Therefore, for each sample, the ratio {$\alpha_{10-100}$/log ($\rho_{25}$)} was figured out for comparison.

Tables 1 to 5 show the contents (contents in parts by mol) of Ca, Sr, Mn, and Er in the case of Ti regarded as 100 parts by mol, $\rho_{25}$ ($\Omega \cdot$cm), TR100 (°C), $\alpha_{10-100}$ (%/°C), and ($\alpha_{10-100}$)/log($\rho_{25}$) for each sample.

It is to be noted that Tables, 1, 2, 3, 4, and 5 respectively show samples with the Mn contents of 0.005 parts by mol, 0.01 parts by mol, 0.02 parts by mol, 0.03 parts by mol, and 0.04 parts by mol.

The method for the composition analysis was achieved by ICP-AES (Inductively Coupled Plasma-Atomic Emission Spectrometry).

As described above, because the resistivity value of the semiconductor ceramic varies significantly with changes in the additive amount of Er as a donor (semiconducting agent), various samples with varying donor amounts are evaluated, and the sample with the Er content (Er-$\rho_{min}$), which exhibits the minimum resistivity, is adopted as the foregoing sample, in order to allows comparisons on the same basis.

It is to be noted that when resistance-temperature characteristics were not measured because of the high resistances of the samples, the mark "-" was put in the columns of the corresponding items.

The present invention is intended to further lower the detection temperature while keeping the room-temperature resistance low. In addition, the invention is intended for a high degree of detection accuracy. Therefore, with a low room-temperature resistance ($\rho_{25}$), low TR100, and a large slope of resistance-temperature characteristics as indexes, samples that meet all of the following target levels were considered as non-defective products within the scope of the present invention.

$$\rho_{25} \leq 70 \ \Omega \cdot cm$$

$$TR100 \leq 75°C$$

$$\{\alpha_{10-100}/\log(\rho_{25})\} \geq 10$$

In the tables, the samples with sample numbers without * fall within the scope of the present invention, whereas the samples with sample numbers with * fall outside the scope of the present invention.

The following phenomena have been identified in the respective samples shown in Tables 1 to 5.

In the samples 1 to 12, the Mn contents are lower than those within the scope of the present invention. Therefore, in the samples 1 to 3, 5, 6, and 9, the TR100 fails to meet the target level according to the present invention. In the samples 4, 7, 8, and 10 to 12 with high Sr contents, the TR100 meets the target level, while the ratio ($\alpha_{10-100}$)/log($\rho_{25}$) fails to meet the target level according to the present invention.

In the samples 401 to 412, the $\rho_{25}$ fails to meet the target level according to the present invention, because the Mn contents are higher than those within the scope of the present invention.

In the samples 101 to 104, 201 to 204, and 301 to 304, the Ca contents are lower than those within the scope of the present invention. Therefore, in the samples 101 to 103, 201, 202, 301, and 302 which have failed to achieve the effect of increased $\alpha$, the TR100 fails to meet the target level. In the samples 104, 203, 204, 303, and 304 with high Sr contents, the TR100 meets the target level, while the ratio ($\alpha_{10-100}$) /log ($\rho_{25}$) fails to meet the target level according to the present invention.

In the samples 123 to 126, 223 to 226, and 323 to 326, the $\rho_{25}$ fails to meet the target level according to the present invention because the Ca contents are higher than those within the scope of the present invention.

In the samples 105, 106, 111, 117, 205, 211, 217, 305, 311, and 317, the TR100 fails to meet the target level according to the present invention, because the Sr contents are lower than those within the scope of the present invention.

In the samples 110, 116, 122, 210, 216, 222, 310, 316, 321, and 322, the $\rho_{25}$ fails to meet the target level according to the present invention because the Sr contents are higher than those within the scope of the present invention.

The samples 107 to 109, 112 to 115, 118 to 121, 206 to 209, 212 to 215, 218 to 221, 306 to 309, 312 to 315, and 318 to 320 have the appropriate combinations of Ca, Sr, Mn, and Er contents, and thus meet: $\rho_{25} \leq 70 \ \Omega \cdot cm$; TR100 $\leq 75°C$; and $\{\alpha_{10-100}/\log(\rho_{25})\} \geq 10$ at the same time.

(Experiment 2)

In each of the samples 106, 206, and 306 in Experiment 1, the Ca content x is 20 parts by mol, and the Sr content y is 19 parts by mol. However, the samples differ in Mn content z, and the samples 106, 206, and 306 respectively have 0.01 parts by mol of, 0.02 parts by mol of, and 0.03 parts by mol of Mn.

In Experiment 2, first, a sample 506 in which the Ca content x was 20 parts by mol, the Sr content y was 19 parts by mol, and the Mn content z was 0.019 parts by mol was subjected to an additional experiment. It is to be noted that the Er content (Er-$\rho_{min}$), which exhibited the minimum resistivity, was adopted as for Er. Table 6 shows $\rho_{25}$ ($\Omega \cdot cm$), TR100 (°C), $\alpha_{10-100}$ (%/°C), and ($\alpha_{10-100}$) /log ($\rho_{25}$) for the samples 106, 206, and 306, and the sample 506.

[Table 6]

Table 6

| Sample Number | Ca (part by mol) | Sr (part by mol) | Mn (part by mol) | Er_$\rho$ min (part by mol) | $\rho_{25}$ ($\Omega \cdot$cm) | TR100 (°C) | $\alpha_{10\text{-}100}$ (%/°C) | $(\alpha_{10\text{-}100})$ /log $(\rho_{25})$ |
|---|---|---|---|---|---|---|---|---|
| *106 | 20 | 19 | 0.01 | 0.15 | 8.9 | 82.1 | 11.3 | 11.9 |
| 506 | 20 | 19 | 0.019 | 0.18 | 10.3 | 74.9 | 12.9 | 12.7 |
| 206 | 20 | 19 | 0.02 | 0.18 | 10.9 | 74.7 | 13.3 | 12.8 |
| 306 | 20 | 19 | 0.03 | 0.20 | 19.0 | 73.5 | 15.5 | 12.1 |

As shown in Table 6, the sample 506 meets all of the targeted characteristics according to the present invention. Accordingly, according to the present invention, the formula [y ≥ -0.8x + 37] is not applied in the case of z = 0.019.

In addition, in each of the samples 121, 221, and 321 in Experiment 1, the Ca content x is 25 parts by mol, and the Sr content y is 25 parts by mol. However, the samples differ in Mn content z, and the samples 121, 221, and 321 respectively have 0.01 parts by mol of, 0.02 parts by mol of, and 0.03 parts by mol of Mn.

In Experiment 2, next, a sample 521 in which the Ca content x was 25 parts by mol, the Sr content y was 25 parts by mol, and the Mn content z was 0.021 parts by mol was subjected to an additional experiment. It is to be noted that the Er content (Er-$\rho_{min}$), which exhibited the minimum resistivity, was adopted as for Er. Table 7 shows $\rho_{25}$ ($\Omega \cdot$cm), TR100 (°C), $\alpha_{10\text{-}100}$ (%/°C), and $(\alpha_{10\text{-}100})$ /log $(\rho_{25})$ for the samples 121, 221, and 321, and the sample 521.

[Table 7]

Table 7

| Sample Number | Ca (part by mol) | Sr (part by mol) | Mn (part by mol) | Er_$\rho$ min (part by mol) | $\rho_{25}$ ($\Omega \cdot$cm) | TR100 (°C) | $\alpha_{10\text{-}100}$ (%/°C) | $(\alpha_{10\text{-}100})$ /log $(\rho_{25})$ |
|---|---|---|---|---|---|---|---|---|
| 121 | 25 | 25 | 0.01 | 0.5 | 55.1 | 48.4 | 21.3 | 12.2 |
| 221 | 25 | 25 | 0.02 | 0.18 | 68.5 | 43.6 | 25.5 | 13.9 |
| 521 | 25 | 25 | 0.021 | 0.18 | 69.7 | 43.0 | 25.8 | 14.0 |
| *321 | 25 | 25 | 0.03 | 0.20 | 224.9 | 39.7 | 26.5 | 11.3 |

As shown in Table 7, the sample 521 meets all of the targeted characteristics according to the present invention. Accordingly, according to the present invention, the formula [y ≤ -x + 48] is not applied in the case of z = 0.021.

As is clear from the results of Experiments 1 and 2 described above, the positive temperature coefficient thermistor for temperature detection according to the present invention is adapted to lower the detection temperature and improve the detection accuracy while keeping a low room-temperature resistance. In addition, the use of the barium titanate semiconductor ceramic according to the present invention can achieve such positive temperature coefficient thermistors suitable for temperature detection. In addition, the use of the barium titanate semiconductor ceramic composition according to the present invention can achieve such barium titanate semiconductor ceramics.

The examples of the barium titanate semiconductor ceramic composition, barium titanate semiconductor ceramic, configuration of the positive temperature coefficient thermistor for temperature detection and manufacturing method therefor, and furthermore, the experimental examples for showing the effectiveness of the present invention have been described above according to the embodiment. However, the present invention is not limited to the foregoing and various changes can be made within the scope of the present invention. For example, the type and amount of the donor (semiconducting agent) added to the semiconductor ceramic are not limited to the foregoing, but similar effects can be achieved even when changes can be made within the general scope.

DESCRIPTION OF REFERENCE SYMBOLS

1: semiconductor ceramic
2a, 2b: external electrode
11: semiconductor ceramic layer
12a, 12b: internal electrode
13: laminated body
14a, 14b: external electrode
100: positive temperature coefficient thermistor according to an embodiment

**Claims**

1. A barium titanate semiconductor ceramic comprising, as its main constituent, a perovskite-type compound containing Ba, Ca, Sr, and Ti, and further comprising R (R represents at least one selected from Y, La, Ce, Pr, Nd, Sm, Eu, Gd, Tb, Dy, Ho, Er, Tm, Yb, and Lu), Mn, and Si as a sintering aid,
   wherein Pb is not contained except in a case of containing Pb as an impurity,
   wherein when the barium titanate semiconductor ceramic is dissolved, the Ca content x in parts by mol, the Sr content y in parts by mol, and the Mn content z in parts by mol in a case of Ti regarded as 100 parts by mol respectively meet:

   $20 \leq x \leq 25$;
   $19 \leq y \leq 25$; and
   $0.01 \leq z \leq 0.03$, and meet:

   $y \geq -0.8x + 37$ in a case of $0.01 \leq z < 0.019$; and
   $y \leq -x + 48$ in a case of $0.021 < z \leq 0.03$,

   wherein

   the resistivity of the barium titanate semiconductor at 25°C, $\rho_{25}$, meets $\rho_{25} \leq 70 \ \Omega \cdot cm$,
   a temperature TR100 at which the resistivity of the barium titanate semiconductor grows to 100 times the resistivity $\rho_{25}$ meets TR100 $\leq$ 75°C, and
   a slope $\alpha_{10\text{-}100}$ of the resistivity of the barium titanate semiconductor with respect to temperature in the case of growing from 10 times to 100 times the resistivity $\rho_{25}$ meets $\{ (\alpha_{10\text{-}100}) / \log (\rho_{25}) \} \leq 10$.

2. A barium titanate semiconductor ceramic composition for forming a barium titanate semiconductor ceramic as defined in claim 1 upon firing.

3. A positive temperature coefficient thermistor for temperature detection, comprising:

   a ceramic body including the barium titanate semiconductor ceramic according to claim 1; and
   an external electrode formed on an outer surface of the ceramic body.

**Patentansprüche**

1. Eine Bariumtitanat-Halbleiterkeramik, die als Hauptbestandteil eine Verbindung vom Perovskit-Typ aufweist, die Ba, Ca, Sr und Ti enthält, und ferner R (R repräsentiert zumindest eines ausgewählt aus Y, La, Ce, Pr, Nd, Sm, Eu, Gd, Tb, Dy, Ho, Er, Tm, Yb und Lu), Mn und Si als ein Sinterhilfsmittel aufweist,
   wobei Pb nicht enthalten ist, außer wenn Pb als eine Unreinheit enthalten ist,
   wobei, wenn die Bariumtitanat-Halbleiterkeramik aufgelöst wird, der Ca-Gehalt x in Teilen pro mol, der Sr-Gehalt y in Teilen pro mol und der Mn-Gehalt z in Teilen pro mol in einem Fall, in dem Ti als 100 Teile pro mol betrachtet wird, jeweils Folgendes erfüllen:

   $20 \leq x \leq 25$;

$19 \leq y \leq 25$; und

$0{,}01 \leq z \leq 0{,}03$ und Folgendes erfüllen:

$y \geq -0{,}8x + 37$ in einem Fall von $0{,}01 \leq z < 0{,}019$; und

$y \leq -x + 48$ in einem Fall von $0{,}021 < z \leq 0{,}03$,

wobei die Resistivität des Bariumtitanat-Halbleiters bei 25 °C, $\rho_{25}$, $\rho_{25} \leq 70$ Ω·cm erfüllt,

eine Temperatur TR100, bei der die Resistivität des Bariumtitanat-Halbleiters auf 100 Mal die Resistivität $\rho_{25}$ wächst, TR100 $\leq$ 75°C erfüllt und

eine Neigung $\alpha_{10\text{-}100}$ der Resistivität des Bariumtitanat-Halbleiters in Bezug auf die Temperatur in dem Fall des Wachstums von 10 Mal zu 100 Mal die Resistivität $\rho_{25}$ $\{(\alpha_{10\text{-}100})/\log(\rho_{25})\} \geq 10$ erfüllt.

**2.** Eine Bariumtitanat-Halbleiterkeramikverbindung zum Bilden einer Bariumtitanat-Halbleiterkeramik, wie sie in Anspruch 1 definiert ist, beim Brennen.

**3.** Ein Positiver-Temperaturkoeffizient-Thermistor für Temperaturerfassung, der folgende Merkmale aufweist:

einen Keramikkörper, der die Bariumtitanat-Halbleiterkeramik gemäß Anspruch 1 aufweist; und
eine äußere Elektrode, die an einer Außenoberfläche des Keramikkörpers gebildet ist.


**Revendications**

**1.** Céramique semi-conductrice au titanate de baryum comprenant, comme constituant principal, un composé de type pérovskite contenant Ba, Ca, Sr et Ti, et comprenant en outre R (R représente au moins un choisi parmi Y, La, Ce, Pr, Nd, Sm, Eu, Gd, Tb, Dy, Ho, Er, Tm, Yb et Lu), Mn et Si comme auxiliaire de frittage,
où Pb n'est pas contenu sauf dans un cas où Pb est contenu comme impureté,
où, lorsque la céramique semi-conductrice au titanate de baryum est dissoute, la teneur en Ca x en parties par mole, la teneur en Sr y en parties par mole et la teneur en Mn z en parties par mole dans un cas de Ti considéré comme 100 parties par mole respectivement obéissent à:

$20 \leq x \leq 25$;
$19 \leq y \leq 25$; et
$0{,}01 \leq z \leq 0{,}03$, et obéissent à:

$y \geq -0{,}8x + 37$ dans un cas de $0{,}01 \leq z < 0{,}019$; et
$y \leq -x + 48$ dans un cas de $0{,}021 < z \leq 0{,}03$,
où

la résistivité du semi-conducteur au titanate de baryum à 25°C, $\rho_{25}$, obéit à $\rho_{25} \leq 70$ Ω.cm,
une température TR100 à laquelle la résistivité du semi-conducteur au titanate de baryum croît jusqu'à 100 fois la résistivité $\rho_{25}$ obéit à TR100 $\leq$ 75°C, et
une pente $\alpha_{10\text{-}100}$ de la résistivité du semi-conducteur au titanate de baryum par rapport à la température dans le cas d'une croissance de 10 fois à 100 fois la résistivité $\rho_{25}$ obéit à $\{(\alpha_{10\text{-}100})/\log(\rho_{25})\} \geq 10$.

**2.** Composition de céramique semi-conductrice au titanate de baryum pour former une céramique semi-conductrice au titanate de baryum telle que définie dans la revendication 1 par cuisson.

**3.** Thermistance à coefficient de température positif pour la détection de température, comprenant:

un corps en céramique incluant la céramique semi-conductrice au titanate de baryum selon la revendication 1; et
une électrode externe formée sur une surface externe du corps en céramique.

FIG. 1

100

2b

1

2a

## REFERENCES CITED IN THE DESCRIPTION

### Patent documents cited in the description

- WO 2013065441 A1